# EUROPÄISCHE PATENTANMELDUNG

(11) **EP 1 260 740 A2**
(43) Veröffentlichungstag der Anmeldung: **27.11.2002**
(21) Anmeldenummer: 02008888.6
(22) Anmeldetag: 20.04.2002
(51) Int. Cl.: F16H 63/32

(54) **Schaltgabel für ein Wechselgetriebe mit einem gabelförmig ausgebildeten Grundkörper aus Blech**

(30) Priorität: 23.05.2001 DE 10125098
(71) Anmelder: INA- Schaeffler KG, 91074 Herzogenaurach (DE)
(72) Erfinder: Schübel, Rainer, 91589 Aurach (DE); Döppling, Horst, 91074 Herzogenaurach (DE); Grieshammer, Andreas, 90429 Nürnberg (DE); Seuferling, Stephan, 91315 Höchstadt (DE); Werner, Stefan, 91413 Neustadt (DE)

(57) **Zusammenfassung**

Eine Schaltgabel (1) für ein Wechselgetriebe mit einem gabelförmig ausgebildeten Grundkörper (2) aus Blech, mit wenigstens einem Führungsauge (4) sowie mit einem Schaltarm (3) aus Blech ist mit einem die räumliche Struktur der Schaltgabel (1) versteifenden Formteil (5) aus Blech versehen.

## Beschreibung

### Gebiet der Erfindung

Die Erfindung betrifft eine Schaltgabel für ein Wechselgetriebe mit einem gabelförmig ausgebildeten Grundkörper aus Blech, mit wenigsten einem Führungsauge sowie mit einem Schaltarm aus Blech, wobei an dem Grundkörper zwischen in der Querebene der Schaltgabel liegenden Gabelenden ein Schaltmaul ausgebildet ist.

### Hintergrund der Erfindung

Eine derartige Schaltgabel ist in EP 0 967 419 beschrieben. Diese Schaltgabel weist einen gabelförmig ausgebildeten Grundkörper auf. Der Grundkörper ist ein Blechpressteil. In dem Grundkörper sind Führungsaugen ausgebildet. In den Führungsaugen sind Gleitlager aus gleitförderndem Kunststoff aufgenommen. An dem Blechpressteil sind außer den Gleitlagern aus Kunststoff auch noch Gleitschuhe aus ebenfalls gleitförderndem Kunststoff für den Eingriff der

Schaltgabel in eine Schiebemuffe vorgesehen. Separat zu dem Blechpressteil ist ein Schaltarm für den Eingriff eines Schaltfingers oder ähnlichem gefertigt. Der Schaltarm ist verglichen zu dem dünnen Blech des Grundkörpers aus dickerem Material durch Feinstanzen hergestellt. Der Grundkörper und der Schaltarm sind mittels geeigneter bekannter Schweißverfahren miteinander verbunden. Der Einsatz von mehreren räumlich ineinandergreifenden sowie verschiebbar auf einer Schaltwelle angeordneten dieser Schaltgabeln soll mit der beschriebenen Ausführung der Schaltgabel ermöglicht werden.

Es gibt auch Anwendungen, bei denen in die Führungsaugen der Schaltgabeln Gleitlager aus Messing/Bronze eingesetzt werden, bzw. die Molybdän oder Grafit als Schicht oder Zusatz in das Gleitlager zugegeben werden. Es werden auch Wälzlager für Dreh- und/oder Längsbewegungen anstelle von Gleitlagern eingesetzt.

Diese an sich gute Lösung ist für bestimmte Anwendungen nicht geeignet bzw. ist dann deren Herstellung zu teuer. Der aus dünnem Blech gefertigte Grundkörper muss aus Gründen der Steifigkeit der Schaltgabel für hohe Belastungen mit Sicken oder ähnlichen Verstärkungen versehen werden. Das Teil selbst und die Werkzeuge zu seiner Herstellung sind deshalb in ihrer Ausführung kompliziert und häufig teuer. Aufgrund seiner komplizierten Struktur nimmt der Grundkörper oftmals viel Bauraum in Anspruch. Der entsprechende Freiraum für eine derartige Anordnung muss geschaffen werden. Der Verbrauch an Material, das Gewicht und die Kosten für die Herstellung einer derartig gestalteten Schaltgabel und für ihre Umgebungskonstruktion sind entsprechend hoch. Die Steifigkeit eines Grundkörpers ist nur durch Änderungen des Grundaufbaus des Blechpressteiles über geänderte oder neue andere Werkzeuge beeinflussbar. Der Vorgang ist damit aufwändig und kostenintensiv. Außerdem ist die Steifigkeit derartiger Anordnungen für hohe Belastungen unter Umständen nicht befriedigend.

### Zusammenfassung der Erfindung

Die Aufgabe der Erfindung ist es daher, eine Schaltgabel aus Blech mit einem Grundkörper, mit wenigstens einem Führungsauge sowie mit einem Schaltarm zu schaffen, durch deren Gestaltung die vorgenannten Nachteile vermieden werden.

Diese Aufgabe ist nach dem Gegenstand des kennzeichnenden Teils des Anspruchs 1 dadurch gelöst, dass die Schaltgabel mit wenigstens einem an dem Grundkörper befestigten sowie die räumliche Struktur der Schaltgabel versteifenden Formteil aus Blech versehen ist, wobei der Schaltarm an dem Formteil sitzt. Der Grundkörper der Schaltgabel ist damit von dem Schaltarm durch ein Formteil getrennt. Das Formteil ist separat zu dem Grundkörper und separat zu dem Schaltarm hergestellt. Das Formteil ist aus Blech, vorzugsweise aus Stahlblech, gefertigt. Für seine Herstellung sind umformtechnische Verfahren wie Biegen, Pressen und Ziehen einsetzbar. Das für die Herstellung des Formteils der erfindungsgemäßen Schaltgabel verwendete Blech kann im Vergleich zu der Dicke des für die Herstellung des Grundkörpers oder des Schaltarmes verwendeten Bleches dicker, dünner oder gleich dick sein. Vorzugsweise ist Stahlblech als Ausgangsmaterial für die Herstellung des Formteiles vorgesehen. Die Werkzeuge für die Herstellung des Grundkörpers sind einfach. Der Grundkörper kann raumsparend gestaltet werden. Die Lösung der Aufgabe lässt zu, dass bei der Verwendung eines gleichen bzw. gering veränderten Grundkörpers aber unterschiedlich gestalteter Formteile, Schaltgabeln für unterschiedliche Belastungen und Einbauverhältnisse kostengünstig herstellbar sind.

Ein weiterer Vorteil ergibt sich für eine Schaltgabel gemäß Erfindung daraus, dass über die Gestalt und Anbindung des Formteils an dem Grundkörper der Schaltgabeln die Steifigkeiten bzw. Elastizitäten einfach und kostengünstig gezielt beeinflussbar sind. Eigenschaften der Schaltgabel, wie hohe Steifigkeit unter Belastung oder gewollt elastisches Nachgeben, sind gezielt durch die Ausführung und Befestigung des Formteiles zu erreichen. Mit Versteifungsrippen an dem Formteil, der Wahl eines Profils mit hohen oder niedrigen Widerstandsmomenten gegen Biegung und/oder Torsion, der Wahl der Befestigungsart des Formteiles an dem Grundkörper und der Lage der Befestigung des Formteiles an dem Grundkörper sind diese Eigenschaften z. B. zu beeinflussen.

Das (die) Führungsauge(n) ist (sind), wie Ausgestaltungen der Erfindung vorsehen, entweder an dem Formteil bzw. in dem Formteil ausgebildet oder separat zu dem Formteil, z. B. aus einem Rohrstück gefertigt, an dem Formteil durch beispielsweise Schweißen befestigt.

Der Schaltarm sitzt je nach Ausführung des Formteiles entweder an einer Nabe mit den Führungsaugen oder an einer anderen geeigneten Stelle an dem Formteil.

Eine begvorzugte Ausgestaltung der Erfindung sieht vor, dass das Formteil eine das Führungsauge bildende, den Schaltarm tragende sowie aus Blech gebogene Öse aufweist, wobei von der Öse wenigstens ein zumindest abschnittsweise an dem Grundkörper anliegender sowie mit dem Grundkörper verschweißter Schenkel abgeht. Ein Teilstück eines flachen Blechstreifens ist bei der Herstellung des Formteiles um seine flache Seite vorzugsweise annähernd kreisrund zu einer Öse gebogen. Der andere Teil des Blechstreifens, an dem die Öse sitzt, ist so gebogen oder geformt, dass er an dem Grundkörper anliegt und befestigt ist sowie die Schaltgabel versteift. Die Schaltgabel sitzt mit Hilfe der Öse an einer Schaltstange und ist mittels des Führungsauges oder mittels Führungsaugen in der Öse auf der Schaltstange zumeist längs der Schaltstange verschiebbar geführt. Die Anwendung von Schaltgabeln mit den Merkmalen der Erfindung ist nicht nur auf Schaltgabeln beschränkt, die längsverschiebbar auf einer Schaltwelle sitzen. Die Erfindung ist auch in Getrieben einzusetzen, in denen die Schaltgabeln fest an einer Schaltstange sitzen oder schwenkbar auf diesen angeordnet sind.

Weiter ausgestaltet sieht die Erfindung vor, dass von der Öse zwei der vorab genannten Schenkel abgehen. Ein Blechstreifen oder ein Profil aus Blech ist dazu zunächst möglichst kreisrund zu einer Öse gebogen. Die Biegeenden des Blechstreifens sind aufeinander zugebogen und lang genug, um nach dem Biegen der Öse von der Öse abgehend mit den einander zugewandten flachen Seiten des Blechstreifens aneinanderliegend von der Öse abzustehen. Schließlich sind die Schenkel voneinanderweisend abgewinkelt. Die Gestalt eines derartigen Formteiles in der Querebene der Schaltgabel betrachtet ähnelt der Form des griechischen Buchstaben Omega. Die nach unten gewandten Abschnitte der gespreizten Schenkel liegen an Abschnitten der Rückseite des Grundkörpers an. Als Rückseite ist dabei die Seite der Schaltgabel zu verstehen, die nach außen von dem Schaltmaul und den Gabelenden der Schaltgabel von dem Grundkörper weg weist. Die Schenkel sind an dem Grundkörper mit allen geeigneten Schweißverfahren wie Widerstands-, Schutzgas- und Laserschweißen verschweißt.

Der Grundkörper der Schaltgabel ist in der Querebene der Schaltgabel gesehen gabelförmig ausgebildet. Gabelförmig gebogen bildet der Grundkörper ein durch die Gabelenden begrenztes Schaltmaul. Die Gabelenden sind aus dem Ausgangsmaterial des Grundkörpers durch Biegen, Ziehen oder Pressen soweit aufeinander zugebracht, dass sie zumeist parallel zueinander ausgerichtet sind und in eine Richtung weisen. Die Ausgangsmaterialien für einen Grundkörper sind z. B. Platinen oder Streifen aus Blech, die durch Pressen oder Ziehen zu einem zumeist versteiften einteiligen Grundkörper oder zu Einzelteilen eines mehrteiligen bzw. doppelwandig ausgebildeten Grundkörpers der Gabel geformt werden. Starre Grundkörper sind auch durch zumindest abschnittsweise U- oder V-förmig ausgebildete Querschnitte an dem Grundkörper erzielbar.

In einer Ausgestaltung der Erfindung weist der Grundkörper zumindest abschnittsweise ein derartig offenes Profil auf. Das Profil ist in der Längsebene der Schaltgabel betrachtet U-förmig mit sich in Längsrichtung verändernden Querschnittsabmessungen ausgebildet. Die Längsachse des Profils läuft dabei parallel mit der Querebene der Schaltgabel. Das Profil ist nach außen, d. h. zur Rückseite und damit zu dem Formteil hin, offen. Der Anteil des Schenkels des Formteiles, der an der Rückseite des Grundkörpers anliegt, ist in seiner Länge von der Anwendung der Schaltgabel und den Anforderungen an ihre Steifigkeit abhängig und kann von Schenkel zu Schenkel sowie von Schaltgabel zu Schaltgabel unterschiedliche gewählt werden. Durch die Wahl unterschiedlicher Schenkellängen an einer Schaltgabel im Vergleich zu einer anderen Schaltgabel können für Schaltgabeln mit gleichen Grundkörpern unterschiedliche Steifigkeiten erzielt werden. Das Formteil ist außerdem vorzugsweise so gestaltet, dass der Anteil des Schenkels, der an der Rückseite des Grundkörpers anliegt, in seiner Breite die Öffnung des Profils abdeckt und dabei entweder auf den Enden der Seitenschenkel des Profils aufliegt oder genau zwischen die Seitenschenkel passend in das Profil eingepasst ist. In dieser Lage ist der Schenkel an seinen Berührungskanten mit dem Profil vorzugsweise mit beiden Seitenschenkeln des Profils verschweißt. Das so an dem Abschnitt entstandene in seinem Querschnitt geschlossene Profil weist hohe Widerstandsmomente auf und erzeugt eine hohe Steifigkeit in der Konstruktion der Schaltgabel.

Eine weitere Ausgestaltung der Erfindung sieht für Schaltgabeln deren Grundkörper an seiner Rückseite nach außen eine geschlossene Wand aufweist vor, dass der Abschnitt des Schenkels, der an der Rückseite des Grundkörpers anliegt, flach an der Wand anliegt. Das Blech des Grundkörpers und das Blech des Schenkels bilden an diesem Abschnitt so eine den Grundkörper versteifende Doppelung. Die Wand des Grundkörpers kann dabei die Wand eines Profils, eines Flachmateriales oder ebenso die Wand eines beliebig aus einer Blechplatine geformten Formteiles des Grundkörpers der Schaltgabel sein.

Mit einer Ausgestaltung der Erfindung ist vorgesehen, die gespreizten Abschnitte der Schenkel an der Öse so zu verformen, dass die Schenkel jeweils auf den Grundkörper treffen und anschließend die Schenkel dann voneinander gespreizt an der Rückseite des Grundkörpers anliegend mit dem Grundkörper verschweißt sind. Der Blechstreifen jedes der Schenkel ist dann im weiteren Verlauf zumindest einmal von der Rückseite weg bis zu einem Umkehrpunkt ansteigend verlaufend gebogen ausgeführt. Anschließend ist der Schenkel von dem Umkehrpunkt wieder in Richtung der Rückseite gebogen ausgeführt. Der Blechstreifen trifft schließlich wieder auf die Rückseite und ist dort mit der Rückseite verschweißt. Das Blech des Schenkels ist somit so verformt, dass der gespreizte Abschnitt des Schenkels in einer Querebene der Schaltgabel nicht abgestreckt oder bogenförmig wie bei den vorhergehenden Ausführungen ausgebildet vorliegt, sondern in diese Ebene eine annähernd wellenförmig ausgebildete Kontur aufweist. Der Grund der Wellentäler ist mit dem Grundkörper verschweißt. Für die Gestaltung des Grundkörpers und der Schenkel in Längsrichtung der Schaltgabel sind in Abhängigkeit der Anwendung alle vorhergehenden Ausführungsformen einsetzbar und beliebig miteinander kombinierbar.

Eine weitere Ausgestaltung der Erfindung sieht vor, dass das Führungsauge in einer rohrförmigen Nabe ausgebildet ist und dass mit der Nabe zwei schenkelförmig abgewinkelt ausgebildete Formteile aus Blech verschweißt sind, wobei die Formteile zunächst mit den flachen Seiten des Blechen aneinander liegen und dann die Formteile im weiteren Verlauf so voneinander gespreizt verlaufen, dass jedes der Formteile zumindest abschnittsweise an dem Grundkörper anliegend mit dem Grundkörper verschweißt ist. Das Formteil lässt sich unter Umständen auf diese Weise einfacher fertigen bzw. steifer gestalten.

Schließlich ist mit einer der Ausgestaltung der Erfindung vorgesehen, dass in dem Führungsauge ein Lager zur zumindest verschiebbaren Lagerung der Schaltgabel auf einer Schaltstange aufgenommen ist. Das oder die Lager sind z. B. Wälzlager für Dreh- und Längsbewegungen bzw. nur für Längsbewegungen, die mit Kugeln und einem die Kugeln führenden Käfig versehen sind. Bevorzug sind jedoch Gleitlager eingesetzt. Diese Gleitlager sind z. B. wartungsfreie Gleitbuchsen. Die Gleitbuchsen weisen einen Metallrücken, z. B. aus Stahl oder Bronze, auf, der mit Metallpulver beschichtet und mit einer Gleitschicht, z. B. aus Polytetrafluorethylen gebildet ist. Derartige Gleitlager sind auch unter der Handelsbezeichnung Permaglide bekannt.

### Kurze Beschreibung der Zeichnungen

Die Erfindung ist nachfolgend anhand von Ausführungsbeispielen näher erläutert. Es zeigen:
- Figur 1: ein Ausführungsbeispiel einer erfindungsgemäßen Schaltgabel in der Hauptansicht,
- Figur 2: eine Schaltgabel nach Figur 1 in einem Längsschnitt entlang der Linie II-II,
- Figur 3: ein weiteres Ausführungsbeispiel einer erfindungsgemäßen Schaltgabel mit einem Formteil, das wellenförmig ausgebildete Versteifungen aufweist und
- Figur 4: ein weiteres Ausführungsbeispiel einer erfindungsgemäßen Schaltgabel, dessen Formteil aus einer separat gefertigten Nabe und Schenkeln gebildet ist.

### Detaillierte Beschreibung der Zeichnungen

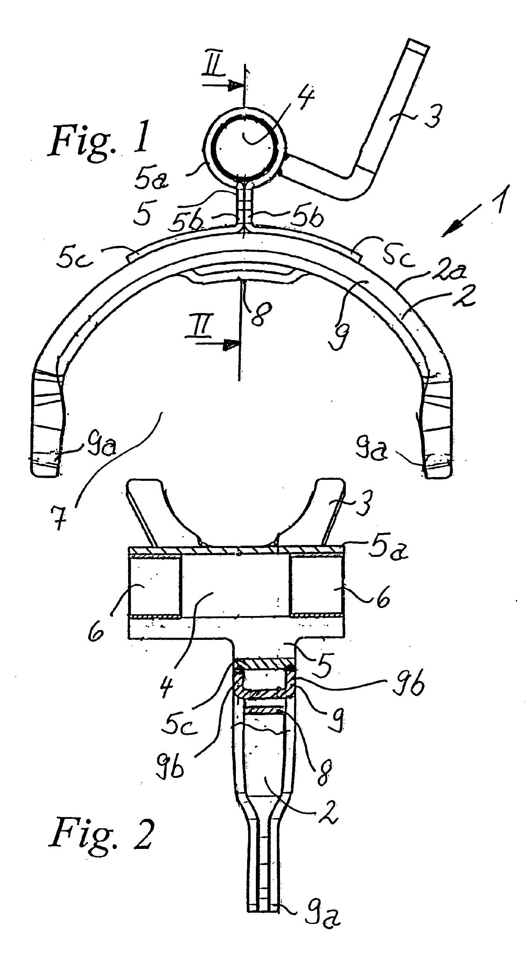

Die Figuren 1 und 2 zeigen ein Ausführungsbeispiel der Erfindung. Eine Schaltgabel 1 ist in Figur 1 in der Hauptansicht in einer Querebene betrachtet dargestellt. Figur 2 zeigt die Schaltgabel 1 in einer Längsebene geschnitten entlang der Linie II-II nach Figur 1. Die Schaltgabel 1 ist aus einem gabelförmigen Grundkörper 2 aus Blech, einem Schaltarm 3, einem Führungsauge 4 und einem Formteil 5 gebildet. Der Grundkörper 2 ist aus einem im Querschnitt U-förmig ausgebildeten Profil 9 von in seinem Verlauf wechselnder Breite sowie aus einer an dem Profil 9 verschweißten Stützlasche 8 gebildet. Das Profil 9 ist bogenförmig gebogen und läuft in Gabelenden 9a aus. Die Gabelenden 9a schließen das Schaltmaul 7 der Schaltgabel 1 zwischen sich ein. Der Schaltarm 3 ist an dem Formteil 5 durch Schweißen befestigt.

Das Formteil 5 ist mit einer das Führungsauge 4 bildenden Öse 5a versehen. In dem Führungsauge 4 sitzen zwei Gleitlager 6. Von der Öse 5a gehen zwei Schenkel 5b ab. Das Formteil 5 ist aus einem Blechstreifen einteilig mit der Öse 5a und den Schenkeln 5b gebildet. Die Schenkel 5b liegen von der Öse 5a abgehend mit den einander zugewandten flachen Seiten des Blechstreifens aneinander und erstrecken sich in Richtung der von dem Schaltmaul 7 des Grundkörpers 2 abgewandten Rückseite 2a des Grundkörpers 2. Die Schenkel 5b sind an der Rückseite 2a voneinander gespreizt in entgegengesetzte Richtung gebogen.

Die abgespreizten Enden 5c der Schenkel 5b sind der Bogenform des gabelförmig gebogenen Profils 9 angepasst bogenförmig geformt. Das im Querschnitt U-förmig ausgebildete Profil 9 ist außen an seiner von dem Schaltmaul 7 abgewandten Seite offen. Auf dem Seitenschenkel 9b des Profils 9 sitzen die Enden 5c der Schenkel 5b auf. Das ansonsten offene Profil 9 ist somit an dem Abschnitt der Rückseite 2a mittels der Enden 5c nach außen verschlossen. Die Seitenkanten der Enden 5c sind mit den Seitenschenkeln 9b des Profils 9 verschweißt.

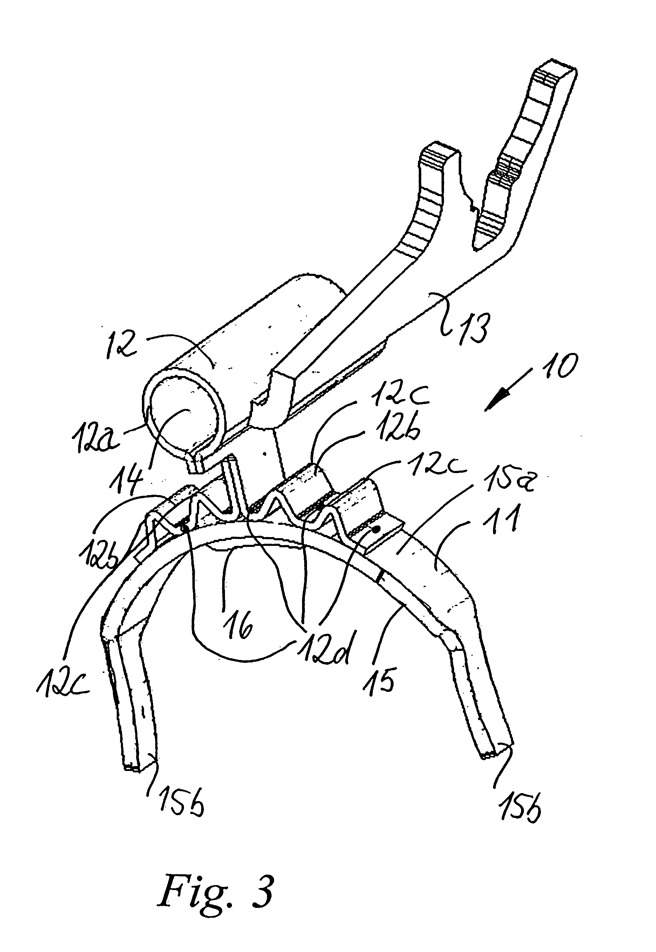

Figur 3 zeigt eine perspektivische Darstellung einer weiteren Schaltgabel 10. Die Schaltgabel 10 ist aus einem Grundkörper 11, einem Formteil 12 und einem Schaltarm 13 gebildet. Das Formteil 12 verbindet den Schaltarm 13 sowie ein in dem Formteil 12 ausgebildetes Führungsauge 14 mit dem Grundkörper 11. Der Grundkörper 11 ist aus einem in seinem Querschnitt rechteckigen Flachmaterial 15 mit in seinem Verlauf variierender Breite geformt. An dem Flachmaterial 15 ist eine Stützlasche 16 befestigt. Die Gabelenden 15b an dem Flachmaterial 15 begrenzen ein Schaltmaul 17.

Das Formteil 12 ist einteilig mit einer aus einem Blech geformten Öse 12a für ein Führungsauge 14 mit Schenkeln 12b gebildet. Die Schenkel 12b gehen von der Öse 12a in Richtung der Rückseite 15a des Flachmateriales 15 ab und liegen dort an. An dem Anlagepunkt 12d ist das Blech des Schenkels 12b mit dem Blech des Flachmaterials 15 verschweißt. Von dieser Verbindung aus ist das Blech des Schenkels 12b wellenförmig ausgebildet. Das Blech ist in wiederholter Reihenfolge zuerst bis zu einem Umkehrpunkt 12c weggebogen, dann von dem Umkehrpunkt 12c aus wieder in Richtung des Flachmateriales 15 bis zu einem Anlagepunkt 12d zurückgebogen und schließlich an dem Anlagepunkt 12d mit dem Flachmaterial verschweißt.

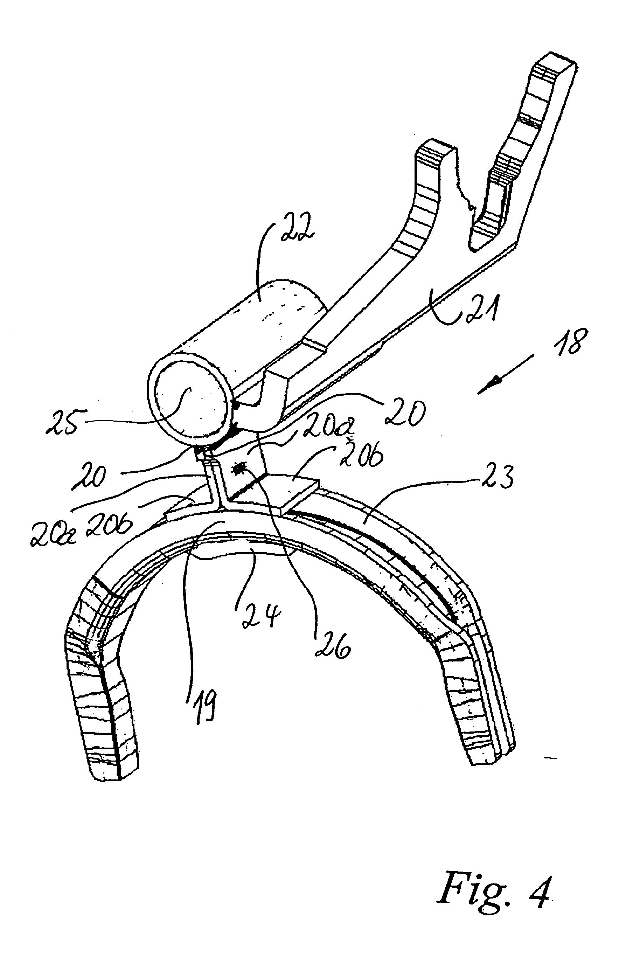

Figur 4 zeigt eine Schaltgabel 18 mit einem Grundkörper 19, mit einem zusammengesetzten Formteil 20, mit einer Nabe 22 und mit einem Schaltarm 21. Der Grundkörper 19 ist aus einem Profil 23 mit U-förmigen Querschnitt und einer Stützlasche 24 gebildet. Die Einzelteile des Formteils 20 sind winkelförmig geformt und an der Nabe 22 sowie an dem Profil 23 verschweißt. Die aus einem Rohrstück gefertigte Nabe 22 weist ein Führungsauge 25 auf. Der Schaltarm 21 ist an der Nabe 22 befestigt. Die voneinander gespreizten Enden 20b der Schenkel 20a des Formteils 20 liegen auf dem nach außen offenen Profil 23 auf und verschließen dieses an diesem Abschnitt des Grundkörpers 19. Die Schenkel 20a sind mit einer Punktschweißung 26 zu dem Formteil 20 zusammengeschweißt.

Aus den Figuren 1 und 4 ist ersichtlich, dass die Bogenlänge der Enden 5c der Schenkel 5b von der Bogenlänge der Enden 20b abweicht. Mit der Wahl unterschiedlicher Bogenlängen der Enden an den Schenkeln der Formkörper lässt sich für Schaltgabeln gemäß Erfindung mit gleich ausgeführten Grundkörpern die Steifigkeit der Schaltgabeln voneinander unterscheidend gestalten.

### Bezugszeichen

- 1: Schaltgabel
- 2: Grundkörper
- 2a: Rückseite
- 3: Schaltarm
- 4: Führungsauge
- 5: Formteil
- 5a: Öse
- 5b: Schenkel
- 5c: Ende
- 6: Gleitlager
- 7: Schaltmaul
- 8: Stützlasche
- 9: Profil
- 9a: Gabelende
- 9b: Seitenschenkel
- 10: Schaltgabel
- 11: Grundkörper
- 12: Formteil
- 12a: Öse
- 12b: Schenkel
- 12c: Umkehrpunkt
- 12d: Anlagepunkt
- 13: Schaltarm
- 14: Führungsauge
- 15: Flachmaterial
- 15a: Rückseite
- 15b: Gabelende
- 16: Stützlasche
- 17: Schaltmaul
- 18: Schaltgabel
- 19: Grundkörper

- 20: Formteil
- 20a: Schenkel
- 20b: Ende
- 21: Schaltarm
- 22: Nabe
- 23: Profil
- 24: Stützlasche
- 25: Führungsauge
- 26: Punktschweißung

## Patentansprüche

1. Schaltgabel (1, 10, 18) für ein Wechselgetriebe mit einem gabelförmig ausgebildeten Grundkörper (2, 11, 19) aus Blech, mit wenigstens einem Führungsauge (4, 14, 25) sowie mit einem Schaltarm (3, 13, 21) aus Blech, wobei an dem Grundkörper (2, 11, 19) zwischen in der Querebene der Schaltgabel (1, 10, 18) liegenden Gabelenden (9a, 15b) ein Schaltmaul (7, 17) ausgebildet ist, **dadurch gekennzeichnet, dass** die Schaltgabel (1, 10, 18) mit wenigstens einem an dem Grundkörper (2, 11, 19) befestigten sowie die räumliche Struktur der Schaltgabel (1, 10, 18) versteifenden Formteil (5, 12, 20) aus Blech versehen ist, wobei der Schaltarm (3, 13, 21) an dem Formteil (5, 12, 20) sitzt.

2. Schaltgabel nach Anspruch 1, **dadurch gekennzeichnet, dass** das Formteil (5, 12) das Führungsauge (4, 14) aufweist.

3. Schaltgabel nach Anspruch 2, **dadurch gekennzeichnet, dass** das Formteil (5, 12) eine das Führungsauge (4, 14) bildende, den Schaltarm (3, 13) tragende sowie aus Blech gebogene Öse (5a, 12a) aufweist, wobei von der Öse (5a, 12a) wenigstens ein zumindest abschnittsweise an dem Grundkörper (2, 11) anliegender sowie mit dem Grundkörper (2, 11) verschweißter Schenkel (5b, 12b) abgeht.

4. Schaltgabel nach Anspruch 3, **dadurch gekennzeichnet, dass** von der Öse (5a, 12a) zwei der Schenkel (5b, 12b) abgehen, wobei die Schenkel (5b, 12b) zunächst mit flachen Seiten des Blechstreifens aneinander liegen sowie sich in Richtung einer von dem Schaltmaul (7, 17) abgewandten Rückseite (2a, 15a) des Grundkörpers (2, 11) erstrecken und dass die Schenkel (5b, 12b) dann im weiteren Verlauf in der Querebene der Schaltgabel (1, 10) voneinander gespreizt abgebogen verlaufen sowie dabei jeder der Schenkel (5b, 12b) zumindest an einem Abschnitt der Rückseite (2a, 15a) anliegend mit dem Grundkörper (2, 11) verschweißt ist.

5. Schaltgabel nach Anspruch 4, **dadurch gekennzeichnet, dass** wenigstens die Rückseite (2a) des Grundkörpers (2) durch ein zumindest an dem Abschnitt in der Querebene der Schaltgabel längsverlaufendes sowie zu den Schenkeln (5b) des Formteiles (5) hin offenes Profil gebildet ist, wobei die Schenkel (5b) des Formteiles (5) das offene Profil an dem Abschnitt anliegend zumindest abschnittsweise abdecken.

6. Schaltgabel nach Anspruch 5, **dadurch gekennzeichnet, dass** das Profil in der Längsebene der Schaltgabel (1) geschnitten betrachtet zumindest an dem Abschnitt U-förmig ausgebildet ist.

7. Schaltgabel nach Anspruch 3, **dadurch gekennzeichnet, dass** von der Öse (12a) zwei zunächst mit der flachen Seite des Blechstreifens aneinander liegende sowie sich in Richtung einer von dem Schaltmaul (17) abgewandten Rückseite (15a) des Grundkörpers (11) erstreckende Schenkel (12b) abgehen, wobei die Schenkel (12b) jeweils auf den Grundkörper (11) treffen und anschließend die Schenkel (12b) dann voneinander gespreizt an der Rückseite (15a) des Grundkörpers (11) anliegend mit dem Grundkörper (11) verschweißt sind und dass der Blechstreifen jedes der Schenkel (12b) im weiteren Verlauf zumindest einmal von der Rückseite (15a) weg bis zu einem Umkehrpunkt (12c) ansteigend verlaufend gebogen sowie anschließend von dem Umkehrpunkt wieder in Richtung der Rückseite (15a) gebogen ausgeführt ist und wobei der Blechstreifen schließlich auf die Rückseite (15a) trifft und mit der Rückseite (15a) verschweißt ist.

8. Schaltgabel nach Anspruch 4, **dadurch gekennzeichnet, dass** die Schenkel (12b) des Formteils (12) an dem Abschnitt flach an einer Wand der Rückseite (15a) des Grundkörpers (11) anliegen, wobei das Blech des Formteiles (12) und das Blech der Wand an dem Abschnitt eine Doppelung bilden.

9. Schaltmaul nach Anspruch 1, **dadurch gekennzeichnet, dass** das Führungsauge (25) in einer rohrförmigen Nabe (22) ausgebildet ist und dass mit der Nabe (22) ein Formteil (20) aus Blech verschweißt ist, wobei das Formteil (20) aus abgewinkelten Schenkeln (20a) gebildet ist, wobei die Schenkel (20a) zunächst mit den flachen Seiten des Bleches aneinander liegen und dann die Schenkel (20a) im weiteren Verlauf so voneinander gespreizt verlaufen, dass jeder Schenkel (20a) zumindest abschnittsweise an dem Grundkörper (19) anliegend mit dem Grundkörper (19) verschweißt ist.

10. Schaltgabel nach Anspruch 1, **dadurch gekennzeichnet, dass** in dem Führungsauge (4) ein Lager zur zumindest verschiebbaren Lagerung der Schaltgabel (1) auf einer Schaltstange aufgenommen ist.

11. Schaltgabel nach Anspruch 10, **dadurch gekennzeichnet, dass** das Lager ein Gleitlager (6) ist.
